# EUROPEAN PATENT APPLICATION

(11) **EP 3 936 948 A1**
(43) Date of publication of application: **12.01.2022**
(21) Application number: 20766469.9
(22) Date of filing: 28.02.2020
(51) Int. Cl.: G05B 13/02

(54) **EQUIPMENT CONTROL SYSTEM**

(30) Priority: 05.03.2019 JP 2019039974
(71) Applicant: DAIKIN INDUSTRIES, LTD., Osaka-shi, Osaka 530-8323 (JP)
(72) Inventor: NODA, Tomohiro, Osaka-shi, Osaka 530-8323 (JP); MORINIBU, Takeshi, Osaka-shi, Osaka 530-8323 (JP); TANAKA, Shouta, Osaka-shi, Osaka 530-8323 (JP)
(74) Representative: Global IP Europe Patentanwaltskanzlei
(86) International application number: PCT/JP2020/008384
(87) International publication number: WO 2020/179686

(57) **Abstract**

In the related art, in a case where machine learning is adopted to control an equipment device, in a case where a learning model performs learning from the beginning, the learning is too costly. In a case where a learned model is used, in contrast, there is no flexibility in additional information since learning has been completed. A control system (1) for an equipment device (20) according to the present disclosure includes a control unit (11, 21) for the equipment device, and a storage unit (12). The storage unit (12) stores a plurality of learned general-purpose models for controlling the equipment device (20). The control unit (11, 21) selects one model to be used for controlling the equipment device (20) from among the plurality of learned general-purpose models.

## Description

### TECHNICAL FIELD

A control system for an equipment device using a general-purpose learned model having high similarity.

### BACKGROUND ART

It has been proposed to adopt machine learning to control air conditioners. In PTL 1 (Japanese Patent No. 2978374), the position and posture of a person are learned from infrared images using different neural networks to enable accurate position detection.

### SUMMARY OF THE INVENTION

### <Technical Problem>

In the related art, adopting machine learning to control air conditioners using infrared images has the following problems. In a case where a learning model performs learning from the beginning, the learning is too costly. In a case where a learned model is used, in contrast, there is no flexibility in additional information since learning has been completed.

### <Solution to Problem>

A control system for an equipment device according to a first aspect includes a control unit for the equipment device, and a storage unit. The storage unit stores a plurality of learned general-purpose models for controlling the equipment device. The control unit selects one model to be used for controlling the equipment device from among the plurality of learned general-purpose models.

In the control system for an equipment device according to the first aspect, a learned model selected from among a plurality of learned general-purpose models is used to control an equipment device. It is therefore possible to control an equipment device with high efficiency.

A control system for an equipment device according to a second aspect is the system according to the first aspect, in which the equipment device includes at least one device selected from the group consisting of an air conditioner, a ventilator, a refrigeration apparatus, a humidity controller, and a water heater.

A control system for an equipment device according to a third aspect is the system according to first aspect or the second aspect, in which the control unit selects the one model in accordance with a type of the equipment device, a surrounding environment, or a use condition of the equipment device.

When selecting a model to be applied from the plurality of learned model, the control system for an equipment device according to the third aspect can select a suitable learned model because the system determines the model to be applied based on the similarity of the environment.

A control system for an equipment device according to a fourth aspect is the system according to any one of the first to third aspects, in which the control unit further performs additional learning using the selected model.

In the control system for an equipment device according to the fourth aspect, performing additional learning further makes it possible to control the equipment device with high efficiency.

A control system for an equipment device according to a fifth aspect is the system according to the fourth aspect, in which the control unit reflects a result of the additional learning in the selected general-purpose model and stores in the storage unit the general-purpose model in which the result is reflected.

In the control system for an equipment device according to the fifth aspect, the general-purpose model is updated, and thus the learned result for the device can be used for controlling another equipment device in another environment.

A control system for an equipment device according to a sixth aspect is the system according to any one of the first to fifth aspects, in which an input of the one model to be used for controlling the equipment device includes an image.

The image is suitable for an input of a learning model because a large amount of data can be obtained by a single imaging device without using a large number of sensors.

A control system for an equipment device according to a seventh aspect is the system according to the sixth aspect, in which the control unit performs pre-processing of the image, and then performs learning with the selected one model using the image that has been pre-processed as an input.

In the control system for an equipment device according to the seventh aspect, dividing the pre-processing can reduce the data required for learning.

A control system for an equipment device according to an eighth aspect is the system according to the seventh aspect, in which the pre-processing of the image is for a purpose of protecting personal information, for a purpose of speeding up learning after the pre-processing, or for both purposes.

In the control system for an equipment device according to the eighth aspect, the pre-processing of the image enables protection of personal information. The pre-processing can also speed up learning.

A control system for an equipment device according to a ninth aspect includes an equipment device arranged in a structure, and a server. The server is connected to the equipment device via a network. The server includes a first control unit and a storage unit. The equipment device includes a main body and a second control unit. The first control unit causes the storage unit to store a plurality of learned general-purpose models for controlling the equipment device. The first control unit or the second control unit selects one model to be used for controlling the equipment device from among the plurality of learned general-purpose models.

In the control system for an equipment device according to the ninth aspect, a learned model selected from among a plurality of learned general-purpose models is used to control an equipment device. It is therefore possible to control an equipment device with high efficiency.

A control system for an equipment device according to a tenth aspect is the system according to the ninth aspect, in which the second control unit acquires environment information and pre-processes the environment information. The first control unit or the second control unit controls the equipment device using the selected model with the pre-processed environment information as at least one input.

In the control system for an equipment device according to the tenth aspect, the second control unit pre-processes the environment information. Thus, the amount of communication between the server and the equipment device can be reduced.

### BRIEF DESCRIPTION OF THE DRAWINGS

Fig. 1 is an overall configuration diagram of a control system 1 according to a first embodiment.
Fig. 2 is a flowchart of a control method for an equipment device according to the first embodiment.

### DESCRIPTION OF EMBODIMENTS

### <First Embodiment

### (1) Control System for Equipment Devices

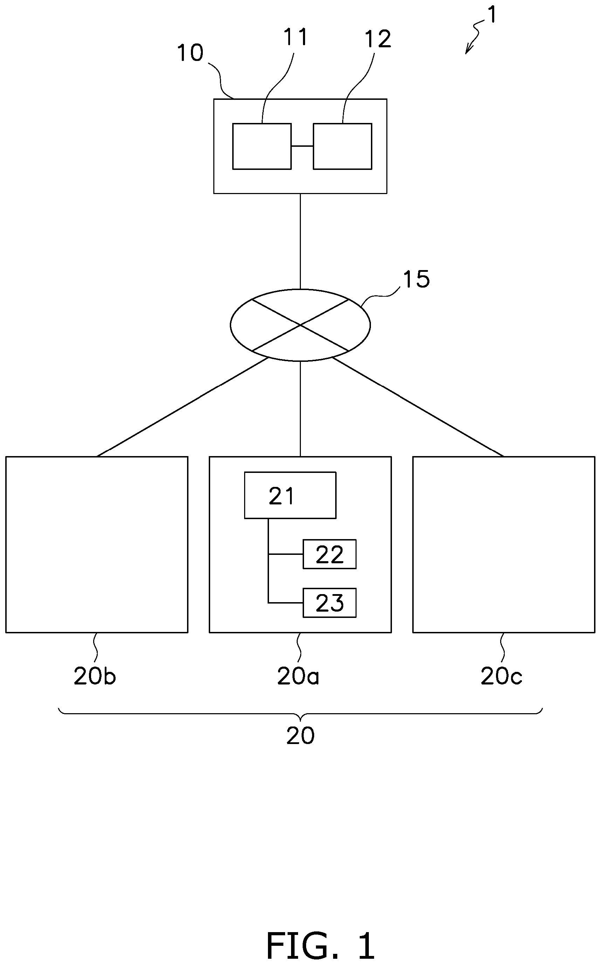

A control system 1 for equipment devices according to a first embodiment is illustrated in Fig. 1. The control system 1 for equipment devices according to this embodiment includes a plurality of equipment devices 20, and a server 10 connected to the equipment devices 20 via a network 15.

The equipment devices 20 are arranged in a structure. The structure may be of various kinds. For example, the structure may be a building or a detached house. The structure may be an office, a school, a commercial facility, or the like, or may be an apartment house, a detached house, or the like.

The equipment devices 20 are air conditioners, ventilators, refrigeration apparatuses, humidity controllers, water heaters, or the like.

In this embodiment, the equipment devices 20 include air conditioners 20a, 20b, and 20c. A typical air conditioner includes an indoor unit and an outdoor unit. In this specification, either an indoor unit or an outdoor unit is sometimes referred to simply as an air conditioner. In this embodiment, the air conditioner 20a represents an indoor unit. The air conditioner 20a includes a second control unit 21, an air conditioning unit 22, and an image acquisition unit 23. The second control unit includes a processor and a storage unit. The second control unit 21 controls the air conditioning unit 22 and the image acquisition unit 23. The air conditioning unit 22 may be the main body of the air conditioner 20a. The air conditioning unit 22 includes a housing, a fan, and a use-side heat exchanger. The image acquisition unit 23 is an infrared camera. The image acquisition unit according to this embodiment acquires thermal images of wall surfaces and floor surfaces in a room.

### (2) Regarding Machine Learning

In this embodiment, machine learning is performed to control equipment devices. The machine learning in this embodiment may be various types of machine learning such as supervised learning, unsupervised learning, semi-supervised learning, reinforcement learning, transduction, and multi-task learning. For example, supervised learning includes multiple regression, logistic regression, ARIMA, VAR, support vector machine, decision tree, random forest, boosting, neural network, and deep learning. Unsupervised learning includes a K-means method, a ward method, principal component analysis, and so on. In the case of supervised learning, learning is performed so as to minimize an error between a predicted value and a measured value of a learning model. In the case of unsupervised learning, a group structure of input data is learned so as to maximize, in the case of reinforcement learning, a reward as a result of a series of actions.

### (3) Control Method for Equipment Device Using General-Purpose Learned Model

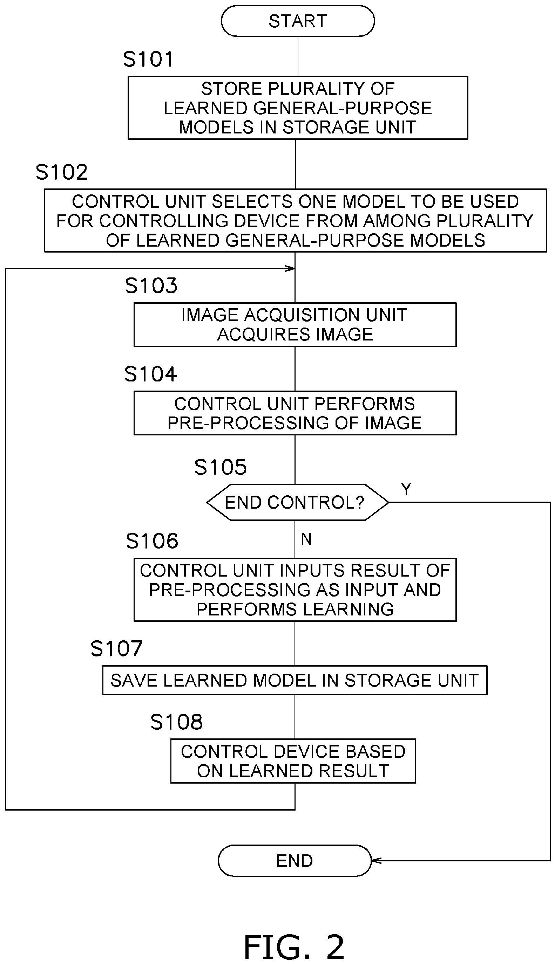

A control method for an equipment device according to the present disclosure will be described with reference to a flowchart illustrated in Fig. 2. Here, the equipment device 20 is implemented as the air conditioner 20a.

In the control method for an equipment device according to this embodiment, first, as a preparatory stage, in step S101, machine learning is performed in a plurality of environments. As a result, learned general-purpose models are created and stored in a storage unit 12. Specifically, machine learning is performed in the air conditioners 20b and 20c and the like in different indoor spaces, and the air conditioners 20b and 20c are controlled. Accordingly, learned general-purpose models are created. It is desirable to prepare a large number of general-purpose models. Two or more general-purpose models are required. The general-purpose models are prepared in accordance with, for example, the type of the air conditioner, the size of the indoor space in which the air conditioner is installed, the entry and exit of people, the outside air temperature, and so on.

Then, in step S102, a first control unit 11 selects a general-purpose model to be used for controlling the air conditioner 20a from among the learned general-purpose models stored in the storage unit. Examples of the criterion for selecting a general-purpose model here include similarity in environment structure. Other examples of the criterion include community in input structure and output structure during learning, and community in the purpose of control. Being common in input structure indicates being similar in the type of the air conditioner or being common in the size of the indoor space, the entry and exit of people to and from a room, outside air temperature, and the like. The output structure means parameters of the air conditioner, such as the air velocity, air volume, air flow direction, and blow-out temperature. The purpose of control is, for example, in this embodiment, to equalize the temperatures of the wall surfaces and the floor surfaces in a room.

Then, the process proceeds to the processing on the equipment device 20 side. In step S103, the image acquisition unit 23 acquires a thermal image of the wall surfaces and the floor surfaces in the room.

Then, the acquired thermal image is subjected to pre-processing by the second control unit 21 (S104).

The pre-processing is for the purpose of protecting personal information, for the purpose of speeding up learning after the pre-processing, or for both purposes.

The pre-processing for the purpose of protecting personal information includes processing treatment of data related to personal information. Examples of such pre-processing include mosaicking processing of an image. The pre-processing for the purpose of speeding up learning include grayscale conversion and scaling.

After step 104, the process proceeds to step S105. In step S105, it is determined whether to end the control. When S105 is reached for the first time, the control is selected not to be ended, and then the process proceeds to step S106.

Then, the data acquired by the equipment device 20 is sent to the server 10 (not illustrated).

Then, the first control unit 11 performs machine learning using the general-purpose model selected in step S102 (S106). The data pre-processed in step S104 is used as an input.

The learned result is stored in the storage unit 12 as a learned model (S107). The learned result may be stored as a learned specialized model or stored as a learned general-purpose model. In a case where the learned model is also used in another environment, the model is used as a learned general-purpose model. In a case where the learned model is used again only in the environment being learned, the model is stored as a specialized model.

Then, a control value based on the learned result is sent from the server 10 to the equipment device 20. In the equipment device 20, the second control unit 21 controls the air conditioning unit 22 based on the learned result (S108). In other words, the blow-out temperature, the air flow direction, the air volume, and the like are adjusted.

After step S108, the process returns to step S103. In step S103, the image acquisition unit 23 acquires a thermal image of the wall surfaces and the floor surfaces in the room again. Then, in step S104, the acquired thermal image is subjected to pre-processing by the second control unit 21.

Then, in step S105, it is determined whether to end the control. Whether to end the control is determined by whether the purpose of the control has been achieved. Here, the determination may be performed by whether the temperature distribution is suppressed in the thermal image acquired by the image acquisition unit. If it is determined that the purpose has been achieved, the control is ended, and the entire flow also ends. If the purpose has not been achieved, the control is not ended. In this case, steps S106 to S108, S103, and S104 are repeatedly performed.

In the learning in step S106 in the second round, as in step S106 in the first round, the selected general-purpose model may be used as the model, or the learned specialized model created in the first round may be used as the model.

In the way described above, steps S103 to S108 are repeated until the purpose has been achieved and the control is ended, and then the control is ended.

### (4) Features

### (4-1)

In the control system for an equipment device according to this embodiment, since a plurality of learned general-purpose models for controlling the equipment device are stored in the storage unit in advance (S101). Then, one model to be used for controlling the equipment device is selected from among the plurality of learned general-purpose models (S102). Then, in a new environment, the selected general-purpose learned model is used to control the equipment device (S108).

In a control system for an equipment device according to the present disclosure, one of a plurality of learned general-purpose models is selected and used, therefore, it is possible to control a device with high efficiency. The term high efficiency means that control can be performed quickly, learning can be performed quickly, the use fee of a machine that performs computation such as learning can be suppressed, and the like.

### (4-2)

In the control system for an equipment device according to this embodiment, a general-purpose learned model is used to further perform additional learning (S106).

In the related art, control using a learned model has no flexibility for additional information since learning has been completed. In the control system for an equipment device according to this embodiment, since additional learning is performed, the flexibility for additional information is high.

### (4-3)

In the control system for an equipment device according to this embodiment, the added learning model is stored in the storage unit 12 (S107). The learned model stored in the storage unit 12 is used for the next learning or control. In other words, this learned model is a specialized learned model. A learned model that has repeatedly performed learning and has also become available for another environment among specialized learned models is stored in the storage unit 12 as a general-purpose learned model.

### (4-4)

In the control system for an equipment device according to this embodiment, processing that can be implemented without being incorporated into a model is performed separately from the model. In the present case, pre-processing is performed before learning is performed with a learned model (S104).

The pre-processing can reduce the load of learning on the model.

### (4-5)

The input used for learning in this embodiment includes an image. Examples of the image include an infrared image (thermal image).

With an infrared image, the temperatures of the wall surfaces, the floor, and other objects in the indoor space can be monitored. Then, it can be used for temperature control of an air conditioner serving as an equipment device.

### (4-6)

The control system 1 for equipment devices according to this embodiment includes the equipment device 20 and the server 10. The server 10 is connected to the equipment device 20 via the network 15. The server 10 includes the first control unit 11 and the storage unit 12. The equipment device 20 includes a main body and the second control unit 21.

A plurality of learned general-purpose models for controlling an equipment device is stored in the storage unit 12 in advance (S101). Then, the first control unit 11 selects one model to be used for controlling the equipment device 20 from among the plurality of learned general-purpose models (S102). Then, the first control unit selects a model adapted to a new environment from among the general-purpose learned models. The first control unit 11 further performs learning using the selected learned model. The second control unit 21 controls the equipment device 20 based on the learned result (S108).

In a control system for an equipment device according to the present disclosure, one of a plurality of learned general-purpose models is selected and used, therefore, it is possible to control a device with high efficiency.

### (4-7)

In (4-6), the second control unit 21 acquires environment information and pre-processes the environment information. The first control unit receives the pre-processed environment information as an input and performs learning. The second control unit controls the equipment device using the learned result.

In the control system for an equipment device according to this embodiment, since the environment information is pre-processed on the equipment device 20 side, the load on the server is reduced. In addition, the amount of communication between the server and the equipment device can be reduced. Furthermore, the load of learning on the model can be reduced.

While an embodiment of the present disclosure has been described, it will be understood that forms and details can be changed in various ways without departing from the spirit and scope of the present disclosure as recited in the claims.

### REFERENCE SIGNS LIST

- 1: control system
- 10: server
- 11: first control unit
- 12: storage unit
- 20: equipment device
- 20a, 20b, 20c: air conditioner
- 21: second control unit
- 22: air conditioning unit (main body)
- 23: image acquisition unit

### CITATION LIST

### PATENT LITERATURE

PTL 1: Japanese Patent No. 2978374

## Claims

1. A control system (1) for an equipment device (20), comprising:
a control unit (11, 21) for the equipment device; and
a storage unit (12), wherein
the storage unit stores a plurality of learned general-purpose models for controlling the equipment device, and
the control unit selects one model to be used for controlling the equipment device from among the plurality of learned general-purpose models.

2. The control system for an equipment device according to Claim 1, wherein
the equipment device includes at least one device selected from the group consisting of an air conditioner, a ventilator, a refrigeration apparatus, a humidity controller, and a water heater.

3. The control system for an equipment device according to Claim 1 or 2, wherein
the control unit selects the one model in accordance with a type of the equipment device, a surrounding environment, or a use condition of the equipment device.

4. The control system for an equipment device according to any one of Claims 1 to 3, wherein
the control unit further performs additional learning using the selected model.

5. The control system for an equipment device according to Claim 4, wherein
the control unit reflects a result of the additional learning in the selected general-purpose model and stores in the storage unit the general-purpose model in which the result is reflected.

6. The control system for an equipment device according to any one of Claims 1 to 5, wherein
an input of the one model to be used for controlling the equipment device includes an image.

7. The control system for an equipment device according to Claim 6, wherein
the control unit performs pre-processing of the image, and
then performs learning with the selected one model using the image that has been pre-processed to the pre-processing as an input.

8. The control system for an equipment device according to Claim 7, wherein
the pre-processing of the image is for a purpose of protecting personal information, for a purpose of speeding up learning after the pre-processing, or for both purposes.

9. A control system (1) for an equipment device, comprising:
an equipment device (20) arranged in a structure; and
a server (10) connected to the equipment device via a network, wherein
the server includes a first control unit (11) and a storage unit (12),
the equipment device includes a main body (22) and a second control unit (21),
the first control unit causes the storage unit to store a plurality of learned general-purpose models for controlling the equipment device, and
the first control unit or the second control unit selects one model to be used for controlling the equipment device from among the plurality of learned general-purpose models.

10. The control system for an equipment device according to Claim 9, wherein
the second control unit acquires environment information and pre-processes the environment information, and
the first control unit or the second control unit controls the equipment device using the selected model with the pre-processed environment information as at least one input.
